# EUROPÄISCHE PATENTSCHRIFT

(11) **EP 4 081 354 B1**
(45) Veröffentlichungstag und Bekanntmachung des Hinweises auf die Patenterteilung: **20.03.2024**
(21) Anmeldenummer: 20824423.6
(22) Anmeldetag: 11.11.2020
(51) Int. Cl.: B07C 5/36, B07C 5/00

(54) **SORTIERVORRICHTUNG UND -VERFAHREN**
SORTING DEVICE AND METHOD
DISPOSITIF ET PROCÉDÉ DE TRI

(30) Priorität: 23.12.2019 AT 511562019
(43) Veröffentlichungstag der Anmeldung: 02.11.2022
(73) Patentinhaber: TGW Logistics Group GmbH, 4614 Marchtrenk (AT)
(72) Erfinder: LINDLEY, Timothy, 58239 Schwerte (DE)
(74) Vertreter: Burger, Hannes
(86) Internationale Anmeldenummer: PCT/AT2020/060396
(87) Internationale Veröffentlichungsnummer: WO 2021/127715

(56) Entgegenhaltungen:
- EP-A1- 2 789 555
- EP-A1- 3 437 745

## Beschreibung

Die Erfindung betrifft eine Sortiervorrichtung und ein Sortierverfahren.

Eine gattungsgemäße Sortiervorrichtung und ein zugehöriges Sortierverfahren wird in der Anmeldung EP 3 437 745 A1 offenbart. Hierbei werden entweder Unterbrecher in der Mitte von Staubahnen verwendet, oder Scanvorrichtungen am Ende der Staubahnen. Dies kann jedoch große Lücken zwischen den zu sortierenden Waren entstehen lassen, welche sich nachteilig auf die Leistung der Sortieranlage bzw. des Sortierverfahrens auswirken.

Ferner ist aus der DE 101 45 606 A1 ein Verfahren zum Einlagern von Waren bekannt, wobei die Waren zunächst in einen ersten Warenspeicher geführt werden. Vor einer Verzweigung werden Daten der Waren erfasst. Anhand der Daten wird entschieden, ob die Waren in einen zweiten Warenspeicher weitergeführt oder ausgegeben werden. Hierbei werden die Waren jedoch nicht sortiert.

Aufgabe der vorliegenden Erfindung ist es, die Nachteile des Standes der Technik zu überwinden und eine Sortiervorrichtung und ein Sortierverfahren zur Verfügung zu stellen, mittels der / dem eine einfache und effiziente Sortierung von Waren möglich ist.

Diese Aufgabe wird durch eine Sortiervorrichtung und ein Sortierverfahren gemäß den beigefügten unabhängigen Ansprüchen gelöst.

Eine Sortiervorrichtung nach einem Aspekt der vorliegenden Erfindung betrifft eine (automatisierte) Sortiervorrichtung zum Sortieren mehrerer Waren, wobei die Vorrichtung zumindest eine erste Sortierstufe mit zumindest zwei ersten Sortierlinien umfasst. Diese weisen jeweils stromaufwärts einen ersten Eingang und stromabwärts einen ersten Ausgang auf, wobei die ersten Eingänge der ersten Sortierlinien der ersten Sortierstufe mit einer Zuführbahn zum Zuführen der Waren verbunden sind. Die ersten Ausgänge der ersten Sortierlinien der ersten Sortierstufe sind mit einer ersten Transportbahn zum Weiterführen / Weitertransportieren der Waren verbunden und an den ersten Ausgängen der ersten Sortierlinien der ersten Sortierstufe ist je ein erster Stopper angeordnet. Dieser umfasst ein Schaltelement, welches durch eine Steuerung betätigbar ist, um eine Gruppe von Waren aus der jeweiligen ersten Sortierlinie auf die erste Transportbahn abzugeben. In der Zuführbahn ist stromaufwärts der ersten Sortierlinien eine erste Einrichtung zum Separieren und Identifizieren angeordnet. In den ersten Sortierlinien der ersten Sortierstufe und stromaufwärts zum jeweiligen ersten Stopper ist je eine zweite Einrichtung zum Separieren und Identifizieren angeordnet. Ferner umfasst die Vorrichtung zumindest eine zweite Sortierstufe mit zumindest zwei zweiten Sortierlinien. Diese weisen jeweils stromaufwärts einen zweiten Eingang und stromabwärts einen zweiten Ausgang auf. Dabei sind die ersten Ausgänge der ersten Sortierlinien der ersten Sortierstufe über die erste Transportbahn mit den zweiten Eingängen der zweiten Sortierlinien der zweiten Sortierstufe verbunden, so dass Waren aus einer (beliebigen) der ersten Sortierlinien der ersten Sortierstufe in eine (beliebige) der zweiten Sortierlinien der zweiten Sortierstufe überführbar sind. Die zweiten Ausgänge der zweiten Sortierlinien der zweiten Sortierstufe sind mit einer zweiten Transportbahn zum Weiterführen / Weitertransportieren der Waren verbunden.

An den zweiten Ausgängen der zweiten Sortierlinien der zweiten Sortierstufe ist je ein zweiter Stopper angeordnet, der ein Schaltelement umfasst, welches durch eine Steuerung betätigbar ist, um eine Gruppe von Waren aus der jeweiligen zweiten Sortierlinie auf die zweite Transportbahn abzugeben. In der ersten Transportbahn ist eine dritte Einrichtung zum Separieren und Identifizieren angeordnet.

In den zweiten Sortierlinien der zweiten Sortierstufe und stromaufwärts zum jeweiligen zweiten Stopper ist je eine vierte Einrichtung zum Separieren und Identifizieren angeordnet, wobei die Einrichtungen zum Separieren und Identifizieren mit der Steuerung verbunden sind. Dies kann den Vorteil haben, dass die Lücken zwischen den Waren bzw. Gruppen von Waren in allen Sortierstufen und Sortierlinien so klein wie möglich gehalten werden und dadurch die Sortierleistung gesteigert wird.

Eine (automatisierte) Sortiervorrichtung gemäß einem weiteren Aspekt der vorliegenden Erfindung umfasst weiterhin eine dritte Sortierstufe, welche stromabwärts der zweiten Sortierstufe angeordnet ist und welche zumindest zwei dritte Sortierlinien umfasst, welche dritten Sortierlinien jeweils stromaufwärts einen dritten Eingang und stromabwärts einen dritten Ausgang aufweisen. Dabei sind die dritten Eingänge der dritten Sortierlinien der dritten Sortierstufe mit der zweiten Transportbahn verbunden und die dritten Ausgänge der dritten Sortierlinien der dritten Sortierstufe sind mit einer dritten Transportbahn zum Weiterführen / Weitertransportieren der Waren verbunden. An den dritten Ausgängen der dritten Sortierlinien ist je ein dritter Stopper angeordnet, der ein Schaltelement umfasst, welches durch eine Steuerung betätigbar ist, um eine Gruppe von Waren aus der jeweiligen dritten Sortierlinie auf die dritte Transportbahn abzugeben. In der zweiten Transportbahn ist eine fünfte Einrichtung zum Separieren und Identifizieren angeordnet. Dabei ist in den dritten Sortierlinien der dritten Sortierstufe und stromaufwärts zum jeweiligen dritten Stopper je eine sechste Einrichtung zum Separieren und Identifizieren angeordnet. Die fünften und sechsten Einrichtungen zum Separieren und Identifizieren sind mit der Steuerung verbunden. Dies kann den Vorteil haben, dass die Leistung der Sortiervorrichtung gesteigert werden kann.

Eine (automatisierte) Sortiervorrichtung gemäß einem weiteren Aspekt der vorliegenden Erfindung umfasst weiterhin eine vierte Sortierstufe, welche stromabwärts der dritten Sortierstufe angeordnet ist und welche zumindest zwei vierte Sortierlinien umfasst, welche Sortierlinien jeweils stromaufwärts einen vierten Eingang und stromabwärts einen vierten Ausgang aufweisen. Dabei sind die vierten Eingänge der vierten Sortierlinien der vierten Sortierstufe mit der dritten Transportbahn verbunden und die vierten Ausgänge der vierten Sortierlinien der vierten Sortierstufe sind mit einer vierten Transportbahn zum Weiterführen / Weitertransportieren der Waren verbunden. An den vierten Ausgängen der vierten Sortierlinien ist je ein vierter Stopper angeordnet, der ein Schaltelement umfasst, welches durch eine Steuerung betätigbar ist, um eine Gruppe von Waren aus der jeweiligen vierten Sortierlinie auf die vierte Transportbahn abzugeben. In der dritten Transportbahn ist eine siebte Einrichtung zum Separieren und Identifizieren angeordnet. In den vierten Sortierlinien der vierten Sortierstufe und stromaufwärts zum jeweiligen vierten Stopper ist je eine achte Einrichtung zum Separieren und Identifizieren angeordnet, wobei die siebten und achten Einrichtungen zum Separieren und Identifizieren mit der Steuerung verbunden sind. Dies kann den Vorteil haben, dass die Leistung der Sortiervorrichtung weiter gesteigert werden kann.

Bei einer Sortiervorrichtung gemäß einem weiteren Aspekt der vorliegenden Erfindung weist zumindest eine der jeweiligen Sortierstufen mehr als zwei Sortierlinien auf. Dies kann den Vorteil haben, dass die Leistung der Sortiervorrichtung ausgebaut werden kann.

Bei einer Sortiervorrichtung gemäß einem weiteren Aspekt der vorliegenden Erfindung ist die Steuerung vermittels zumindest einer der Einrichtungen zum Separieren und Identifizieren zum Zählen der Ware ausgelegt und vorgesehen. Dies kann den Vorteil haben, dass die Transportbewegung einer jeden Ware in der Sortiervorrichtung mitverfolgt und dies auch für ein Sortierverfahren verwendet werden kann. Dabei werden an der Einrichtung zum Separieren und Identifizieren die Waren gezählt, beispielweise durch Vorbeitransportieren an einem Kontakt, einer Lichtschranke, einem Näherungssensor und dgl. Die Einrichtungen zum Separieren und Identifizieren stellt also nur die Anwesenheit einer Ware fest und zählt sie. Eine solche technische Ausführung ist unaufwändig und arbeitet sehr zuverlässig.

Bei einer Sortiervorrichtung gemäß einem weiteren Aspekt der vorliegenden Erfindung umfassen die Einrichtungen zum Separieren und Identifizieren zumindest ein Lesegerät und den Waren ist ein Identifikationsmittel zugeordnet, welches durch das Lesegerät ausgelesen werden kann. Dies kann den Vorteil haben, dass eine Vielzahl an Informationen einer Ware zugeordnet wird und ggf. auch für die Steuerung der Sortiervorrichtung oder ein Sortierverfahren verwendet werden kann. Das Identifikationsmittel ist vorzugsweise als RFID-Transponder gestaltet und das Lesegerät ist ein RFID-Lesegerät. Die RFID Technologie (radio frequency identification) kann sich als besonders effizient für den Einsatz in der erfindungsgemäßen Sortiervorrichtung erweisen. Ein weiteres mögliches Identifikationsmittel kann ein an der Ware angeordneter Barcode sein, der durch einen Barcodeleser als Lesegerät ausgelesen wird.

Bei einer Sortiervorrichtung gemäß einem weiteren Aspekt der vorliegenden Erfindung umfassen die Zuführbahn, die Sortierlinien und die Transportbahn(en) eine Hängefördervorrichtung zum hängenden Transport der Waren. Die Hängefördervorrichtung erlaubt einen einfachen und schonenden Transport von Waren und ermöglicht bei kompakter Bauweise eine besonders leistungsstarke Sortierung. Vereint mit der erfindungsgemäßen Sortiervorrichtung können die ohnehin schon hohen Sortierleistungen nochmals optimiert werden.

Bei einer Sortiervorrichtung gemäß einem weiteren Aspekt der vorliegenden Erfindung umfasst die Hängefördervorrichtung zumindest eine Hängetasche zur Aufnahme einer oder mehrerer Waren. Die Verwendung von Hängetaschen erlaubt den Transport von verschiedenartigen Waren. Die Hängetasche (oder auch Transporttasche genannt), wie sie beispielweise in der WO 2018/130712 A2 beschrieben ist, weist hierzu einen durch flexible Seitenwände begrenzten Aufbewahrungsraum auf, welcher volumenmaximiert und volumenminiert werden und in welchem eine Ware aufgenommen werden kann.

Bei einer Sortiervorrichtung gemäß einem weiteren Aspekt der vorliegenden Erfindung umfasst die Hängefördervorrichtung Transportträger zum Aufhängen von zumindest einer Ware.

Die Verwendung von derartigen Transportträgern ermöglicht den Transport von Waren auf Bügeln.

Grundsätzlich kann die Hängefördervorrichtung auch zumindest eine Hängetasche zur Aufnahme einer oder mehrerer Waren und zumindest einen Transportträger zum Aufhängen einer oder mehrerer Waren umfassen.

Gemäß einem weiteren Aspekt der vorliegenden Erfindung umfasst ein (automatisches) Sortierverfahren zum Sortieren von Waren die Schritte:
- Zuführen von Waren auf einer Zuführbahn,
- ein erstes Identifizieren und Separieren der Waren in der Zuführbahn (insbesondere mit einer ersten Einrichtung zum Separieren und Identifizieren),
- ein erstes Verteilen der Waren basierend auf dem ersten Identifizieren und Separieren auf zumindest zwei erste Sortierlinien,
- ein zweites Identifizieren und Separieren der Waren in der jeweiligen ersten Sortierlinie (insbesondere mit einer zweiten Einrichtung zum Separieren und Identifizieren),
- ein erstes Sammeln von Waren zu einer Gruppe von Waren in der jeweiligen ersten Sortierlinie (insbesondere an einem ersten Stopper in der ersten Sortierlinie, welcher stromabwärts der zweiten Einrichtung zum Separieren und Identifizieren angeordnet ist),
- ein erstes Abgeben der Gruppe von Waren in eine erste Transportbahn,
- ein drittes Identifizieren und Separieren der Waren in der ersten Transportbahn (insbesondere mit einer dritten Einrichtung zum Separieren und Identifizieren),
- ein zweites Verteilen der Waren basierend auf dem dritten Identifizieren und Separieren auf zumindest zwei zweite Sortierlinien,
- ein viertes Identifizieren und Separieren der Waren in der jeweiligen zweiten Sortierlinie (insbesondere mit einer vierten Einrichtung zum Separieren und Identifizieren),
- ein zweites Sammeln von Waren zu einer Gruppe von Waren in der jeweiligen zweiten Sortierlinie (insbesondere an einem zweiten Stopper in der zweiten Sortierlinie, welcher stromabwärts der vierten Einrichtung zum Separieren und Identifizieren angeordnet ist),
- ein zweites Abgeben der Gruppe von Waren in eine zweite Transportbahn.

Das erste Sammeln von Waren zu einer Gruppe in der jeweiligen ersten Sortierlinie kann das Sammeln von Waren zu einer Gruppe in einer durch eine Steuerung vorgegebenen Anzahl und/oder Art von Waren umfassen.

Bevorzugt wird die Gruppe von Waren in der jeweiligen ersten Sortierlinie zwischen dem ersten Stopper in der ersten Sortierlinie und der zweiten Einrichtung zum Separieren und Identifizieren gebildet. Eine solche Gruppe von Waren kann auch als "Sortierlauf" bezeichnet werden.

Bevorzugt wird die zweite Einrichtung zum Separieren und Identifizieren zwischen dem Eingang und Ausgang einer ersten Sortierlinie angeordnet, sodass während dem ersten Sammeln der Waren zu einer Gruppe am jeweiligen ersten Stopper der ersten Sortierlinie stromaufwärts der zweiten Einrichtung zum Separieren und Identifizieren weiter Waren in die Sortierlinie antransportiert werden können.

Bevorzugt umfasst die erste Sortierstufe mehrere erste Sortierlinien und es können in den ersten Sortierlinien am ersten Stopper jeweils Gruppen von Waren (Sortierläufe) gebildet werden, welche anschließend in die erste Transportbahn durch den ersten Stopper abgegeben werden. Durch die ersten Stopper in den ersten Sortierlinien kann auch das Abgeben der Gruppen von Waren (Sortierläufe) in die erste Transportbahn gesteuert werden, sodass auch auf der ersten Transportbahn die Lücken zwischen den Gruppen von Waren (Sortierläufen) minimiert werden können.

Das zweite Sammeln von Waren zu einer Gruppe in der jeweiligen zweiten Sortierlinie kann das Sammeln von Waren zu einer Gruppe in einer durch eine Steuerung vorgegebenen Anzahl und/oder Art von Waren umfassen.

Bevorzugt wird die Gruppe in der jeweiligen zweiten Sortierlinie zwischen dem zweiten Stopper in der zweiten Sortierlinie und der vierten Einrichtung zum Separieren und Identifizieren gebildet. Eine solche Gruppe von Waren kann auch als "Sortierlauf" bezeichnet werden.

Bevorzugt wird die vierte Einrichtung zum Separieren und Identifizieren zwischen dem Eingang und Ausgang einer vierten Sortierlinie angeordnet, sodass während dem zweiten Sammeln der Waren zu einer Gruppe am zweiten Stopper der jeweiligen zweiten Sortierlinie stromaufwärts der vierten Einrichtung zum Separieren und Identifizieren weiter Waren antransportiert werden können.

Bevorzugt umfasst die zweite Sortierstufe mehrere zweite Sortierlinien und es können in den zweiten Sortierlinien am zweiten Stopper jeweils Gruppen von Waren (Sortierläufe) gebildet werden, welche anschließend in die zweite Transportbahn durch den jeweiligen zweiten Stopper abgegeben werden. Durch die zweiten Stopper in den zweiten Sortierlinien kann auch das Abgeben der Gruppen von Waren (Sortierläufe) in die zweite Transportbahn gesteuert werden, sodass auch auf der zweiten Transportbahn die Lücken zwischen den Gruppen von Waren (Sortierläufen) minimiert werden können.

Das Sortierverfahren zum automatischen Sortieren von Waren, insbesondere Hängewaren, kann beispielsweise mit der oben beschriebenen Sortiervorrichtung durchgeführt werden.

Dies kann den Vorteil haben, dass die Lücken zwischen den Waren minimiert und damit auf kurzen Transportwegen eine maximale Sortierleistung erreicht wird.

Gemäß einem weiteren Aspekt der vorliegenden Erfindung umfasst ein Sortierverfahren weiterhin die Schritte:
- ein fünftes Identifizieren und Separieren der Waren in der zweiten Transportbahn (insbesondere mit einer fünften Einrichtung zum Separieren und Identifizieren),
- ein drittes Verteilen der Waren basierend auf dem fünften Identifizieren und Separieren auf zumindest zwei dritte Sortierlinien,
- ein sechstes Identifizieren und Separieren der Waren in der jeweiligen dritten Sortierlinie (insbesondere mit einer sechsten Einrichtung zum Separieren und Identifizieren),
- ein drittes Sammeln von Waren zu einer Gruppe von Waren in der jeweiligen dritten Sortierlinie (insbesondere an einem dritten Stopper in der dritten Sortierlinie, welcher stromabwärts der dritten Einrichtung zum Separieren und Identifizieren angeordnet ist,
- ein drittes Abgeben der Gruppe von Waren in eine dritte Transportbahn.

Das dritte Sammeln von Waren zu einer Gruppe in der jeweiligen dritten Sortierlinie kann das Sammeln von Waren zu einer Gruppe in einer durch eine Steuerung vorgegebenen Anzahl und/oder Art von Waren umfassen.

Bevorzugt wird die Gruppe von Waren in der jeweiligen dritten Sortierlinie zwischen dem dritten Stopper in der dritten Sortierlinie und der sechsten Einrichtung zum Separieren und Identifizieren gebildet. Eine solche Gruppe von Waren kann auch als "Sortierlauf" bezeichnet werden.

Bevorzugt wird die sechste Einrichtung zum Separieren und Identifizieren zwischen dem Eingang und Ausgang einer dritten Sortierlinie angeordnet, sodass während dem dritten Sammeln der Waren zu einer Gruppe am jeweiligen dritten Stopper stromaufwärts der sechsten Einrichtung zum Separieren und Identifizieren weiter Waren antransportiert werden können.

Bevorzugt umfasst die dritte Sortierstufe mehrere dritte Sortierlinien und es können in den dritten Sortierlinien jeweils Gruppen von Waren (Sortierläufe) gebildet werden, welche anschließend durch den jeweiligen dritten Stopper in die dritte Transportbahn abgegeben werden. Durch die dritten Stopper in den dritten Sortierlinien kann auch das Abgeben der Gruppen von Waren (Sortierläufe) in die dritte Transportbahn gesteuert werden, sodass auch auf der dritten Transportbahn die Lücken zwischen den Gruppen von Waren (Sortierläufen) minimiert werden können.

Gemäß einem weiteren Aspekt der vorliegenden Erfindung umfasst ein Sortierverfahren weiterhin die Schritte:
- ein siebtes Identifizieren und Separieren der Waren in der dritten Transportbahn (insbesondere mit einer siebten Einrichtung zum Separieren und Identifizieren),
- ein drittes Verteilen der Waren basierend auf dem siebten Identifizieren und Separieren auf zumindest zwei vierte Sortierlinien,
- ein achtes Identifizieren und Separieren der Waren in der jeweiligen vierten Sortierlinie (insbesondere mit einer achten Einrichtung zum Separieren und Identifizieren),
- ein viertes Sammeln von Waren zu einer Gruppe von Waren in der jeweiligen vierten Sortierlinie,
- ein viertes Abgeben der Gruppe von Waren in eine vierte Transportbahn.

Das vierte Sammeln von Waren zu einer Gruppe in der jeweiligen vierten Sortierlinie kann das Sammeln von Waren zu einer Gruppe in einer durch eine Steuerung vorgegebenen Anzahl und/oder Art von Waren umfassen.

Bevorzugt wird die Gruppe von Waren in der jeweiligen vierten Sortierlinie zwischen dem vierten Stopper in der vierten Sortierlinie und der achten Einrichtung zum Separieren und Identifizieren gebildet. Eine solche Gruppe von Waren kann auch als "Sortierlauf" bezeichnet werden.

Bevorzugt wird die achte Einrichtung zum Separieren und Identifizieren zwischen dem Eingang und Ausgang einer vierten Sortierlinie angeordnet, sodass während dem vierten Sammeln der Waren zu einer Gruppe am vierten Stopper stromaufwärts der achten Einrichtung zum Separieren und Identifizieren weiter Waren antransportiert werden können.

Bevorzugt umfasst die vierte Sortierstufe mehrere vierte Sortierlinien und es können in den vierten Sortierlinien jeweils Gruppen von Waren (Sortierläufe) gebildet werden, welche anschließend in die vierte Transportbahn durch den jeweiligen vierten Stopper abgegeben werden. Durch die vierten Stopper in den vierten Sortierlinien kann auch das Abgeben der Gruppen von Waren (Sortierläufe) in die vierte Transportbahn gesteuert werden, sodass auch auf der vierten Transportbahn die Lücken zwischen den Gruppen von Waren (Sortierläufen) minimiert werden können.

Ein Schaltelement kann ein Aktuator sein, welcher elektrisch, pneumatisch, hydraulisch (oder eine beliebige Kombination hiervon) betätigt ist, beispielweise ein Piezoventil, Pneumatikventil, ein Hydraulikventil, und dgl.

Eine Steuerung im Sinne dieser Anmeldung kann alle Formen von im Stand der Technik bekannten Steuerungen, insbesondere eine SPS (Speicherprogrammierbare Steuerung) oder eine Materialflusssteuerung umfassen.

Allgemein versteht man unter einer "Hängeware" eine Ware, die beispielsweise über einen Bügel an einem Transportträger hängend transportiert wird. Klassische Beispiele von Hängeware sind Kleidungsstücke, die an Kleiderbügeln hängen, oder Transporttaschen zur Aufnahme von Waren.

Die Einrichtung zum Separieren und Identifizieren kann als kombinierte Einrichtung ausgestaltet sein oder eine Einrichtung zum Separieren und eine Einrichtung zum Identifizieren umfassen. Für den Fall, dass getrennte Einrichtungen verwendet werden, können diese Einrichtungen zusammenwirken und über eine Verbindungsleitung verbunden sein. Die Anordnung von einer kombinierten Einrichtung oder getrennten Einrichtungen kann frei und z. B. ortsabhängig in der Sortiervorrichtung gewählt werden. Die Einrichtung zum Identifizieren und Separieren kann Waren in der Transportbewegung aufhalten (zurückhalten), wenn ein stromabwärts gelegener Transportabschnitt in der Sortierlinie durch die Steuerung noch nicht freigegeben ist, z. B. eine Gruppe von Waren noch nicht vom Stopper freigegeben bzw. auf einen stromabwärts gelegenen Abschnitt der Sortiervorrichtung abgegeben wurde.

Beim Identifizieren kann Information von einem Identifikationsmittel vermittels eines Lesegeräts ausgelesen und durch die Steuerung verarbeitet werden, wie oben beschrieben.

Das Identifizieren kann auch ein Zählen der Waren sein. Zur eindeutigen Identifikation einer einzelnen Ware wird die Ware erfasst und danach lediglich die Waren gezählt, die durch die Sortiervorrichtung laufen. Damit kann die Steuerung zu jedem Zeitpunkt die Position bzw. den Abschnitt in der Sortiervorrichtung einer bestimmten Ware zuordnen und der Sortiervorgang bzw. die Sortiervorrichtung kann entsprechend gesteuert werden.

Der jeweilige Stopper am Ausgang einer Sortierlinie kann im Bereich einer Transportanbindung, beispielweise einer Weiche, an die jeweilige Transportbahn angeordnet sein. Für die Funktion der Vorrichtung ist lediglich eine Anordnung im Bereich des jeweiligen Ausgangs der Sortierlinie notwendig. Jeder Stopper ist mit der Steuerung verbunden.

Die obigen Merkmale der Sortiervorrichtung können auf das Sortierverfahren angewendet werden und anders herum.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Sortiervorrichtung nach einer ersten Ausführungsform;
- Fig. 2: eine erfindungsgemäße Sortiervorrichtung nach einer zweiten Ausführungsform;
- Fig. 3: eine erfindungsgemäße Sortiervorrichtung nach einer dritten Ausführungsform;
- Fig. 4: einen Ablauf eines erfindungsgemäßen Sortierverfahrens in einer ersten Ausführung;
- Fig. 5: einen Ablauf eines erfindungsgemäßen Sortierverfahrens in einer zweiten Ausführung;
- Fig. 6: einen Ablauf eines erfindungsgemäßen Sortierverfahrens in einer dritten Ausführung;
- Fig. 7: eine beispielhafte Ausführung einer Hängefördervorrichtung für die verschiedenen Transportabschnitte (Zuführbahn, Sortierlinien und Transportbahn(en)) der Sortiervorrichtung und mit Hängetaschen zur Aufnahme von Waren, in stark vereinfachter Darstellung;
- Fig. 8: einen Transportträger zum hängenden Transport einer Ware, wie dieser an einer Hängefördervorrichtung verwendet werden kann.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z. B. oben, unten, seitlich usw. auf die unmittelbar beschriebene sowie dargestellte Figur bezogen und sind diese Lageangaben bei einer Lageänderung sinngemäß auf die neue Lage zu übertragen.

Es sei darauf hingewiesen, dass in den Figuren der Fluss der Waren von oben nach unten verläuft. Ebenso sind aus Gründen der besseren Übersicht nur einige wenige Waren bzw. Gruppen von Waren dargestellt.

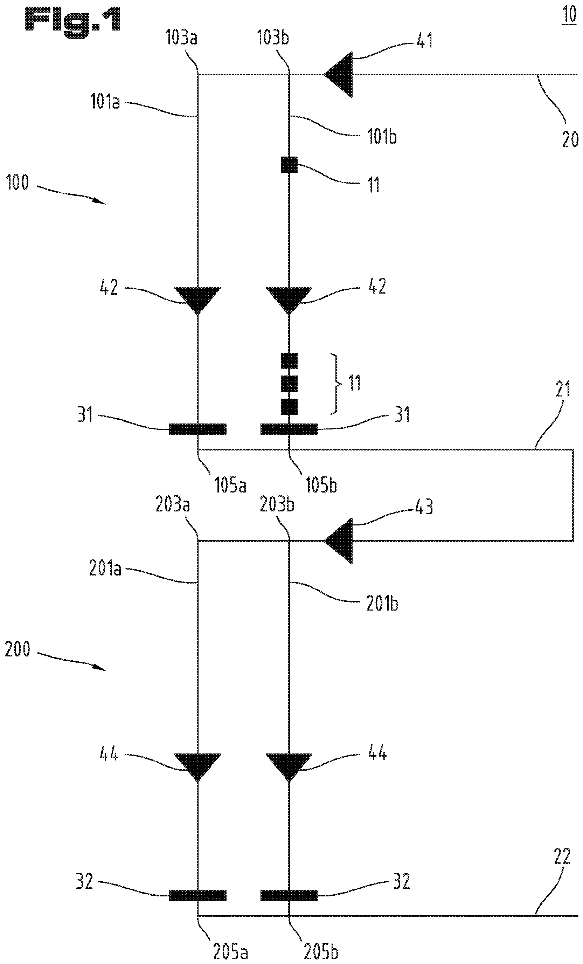

Unter anfänglicher Bezugnahme ist in Fig. 1 eine erste schematische Ausführungsform einer erfindungsgemäßen Sortiervorrichtung 10 dargestellt. Die Sortiervorrichtung 10 umfasst eine Steuerung (nicht gezeigt), eine erste Sortierstufe 100, eine zweite Sortierstufe 200, eine Zuführbahn 20, eine erste Transportbahn 21 und eine zweite Transportbahn 22. Die erste Sortierstufe 100 umfasst zwei erste Sortierlinien 101a und 101b. Die zweite Sortierstufe 200 umfasst zwei zweite Sortierlinien 201a und 201b. Die ersten Sortierlinien 101a und 101b umfassen je erste Eingänge 103a und 103b, sowie erste Ausgänge 105a und 105b. Die ersten Eingänge 103a und 103b sind mit der Zuführbahn 20 verbunden. Die Zuführbahn 20 umfasst weiterhin stromaufwärts der ersten Eingänge 103a und 103b eine erste Einrichtung zum Separieren und Identifizieren 41. Die ersten Ausgänge 105a und 105b sind mit der ersten Transportbahn 21 verbunden.

Je eine zweite Einrichtung zum Separieren und Identifizieren 42 ist in jeder der ersten Sortierlinien 101a und 101b stromaufwärts von dem jeweiligen ersten Ausgang 105a bzw. 105b angeordnet. Eine dritte Einrichtung zum Separieren und Identifizieren 43 ist in der ersten Transportbahn 21 stromabwärts der ersten Ausgänge 105a und 105b und stromaufwärts von zweiten Eingängen 203a und 203b angeordnet.

Jeweils ein Stopper 31 ist zwischen dem jeweiligen ersten Ausgang 105a bzw. 105b und der jeweiligen zweiten Einrichtung zum Separieren und Identifizieren 42 angeordnet. Die Sortiervorrichtung 10 umfasst demnach auch die Stopper 31. Alle Stopper 31 sind dazu vorgesehen, eine Gruppe von Waren 11 aus der jeweiligen Sortierlinie auf die stromabwärts angeordnete Transportbahn auszulassen bzw. an diese abzugeben. In Fig. 1 ist eine Gruppe von drei Waren 11 stromaufwärts des Stoppers 31 in der ersten Sortierlinie 101b angeordnet und wird durch den Stopper 31 gehalten. Wird der Stopper 31 durch die Steuerung geöffnet, gelangt die durch den Stopper 31 aufgestaute Gruppe von Waren 11 auf die jeweilige stromabwärts angeordnete Transportbahn 21. Bevorzugt wird eine nächste Ware 11 in der ersten Sortierlinie 101b stromaufwärts der zweiten Einrichtungen zum Separieren und Identifizieren 42 nachtransportiert.

Demnach kann die Sortiervorrichtung 10 zum Sortieren mehrerer Waren 11 umfassen:
- eine Zuführbahn 20 zum Zuführen der Waren 11,
- zumindest eine erste Sortierstufe 100 mit zumindest zwei ersten Sortierlinien 101a, 101b, welche jeweils stromaufwärts einen ersten Eingang 103a, 103b und stromabwärts einen ersten Ausgang 105a, 105b aufweisen,
- zumindest eine erste Transportbahn 21 zum Weiterführen der Waren 11,
- an den ersten Ausgängen 105a, 105b der ersten Sortierlinien 101a, 101b der ersten Sortierstufe 100 je einen ersten Stopper 31,
- in der Zuführbahn 20 stromaufwärts der ersten Sortierlinien 101a, 101b eine erste Einrichtung zum Separieren und Identifizieren 41, und/oder
- in den ersten Sortierlinien 101a, 101b der ersten Sortierstufe 100 und stromaufwärts zum jeweiligen ersten Stopper 31 je eine zweite Einrichtung zum Separieren und Identifizieren 42.

Die ersten Eingänge 103a, 103b der ersten Sortierlinien 101a, 101b der ersten Sortierstufe 100 sind mit der Zuführbahn 20 zum Zuführen der Waren 11 verbunden und die ersten Ausgänge 105a, 105b der ersten Sortierlinien 101a, 101a der ersten Sortierstufe 100 sind mit der ersten Transportbahn 21 zum Weiterführen der Waren 11 verbunden.

Die zweiten Sortierlinien 201a und 201b der zweiten Sortierstufen 200 sind mit ihren jeweiligen zweiten Eingängen 203a und 203b mit der ersten Transportbahn 21 stromabwärts der dritten Einrichtung zum Separieren und Identifizieren 43 verbunden. Der Aufbau der zweiten Sortierlinien 201a und 201b entspricht dem der ersten Sortierlinien 101a und 101b, wobei eine vierte Einrichtung zum Separieren und Identifizieren 44 in jeder der zweiten Sortierlinien 201a und 201b stromaufwärts von dem jeweiligen zweiten Ausgang 205a bzw. 205b angeordnet ist. Eine detaillierte Beschreibung wird der Kürze willen hier nicht gegeben. Die Ausgänge 205a und 205b der zweiten Sortierlinien 201a und 201b sind mit der zweiten Transportbahn 22 verbunden.

Jeweils ein Stopper 32 ist zwischen dem jeweiligen zweiten Ausgang 205a bzw. 205b und der jeweiligen vierten Einrichtung zum Separieren und Identifizieren 44 angeordnet. Die Sortiervorrichtung 10 umfasst demnach auch die Stopper 32. Alle Stopper 32 sind, analog zu den Stoppern 31 der ersten Sortierstufe 100, dazu vorgesehen, eine Gruppe von Waren 11 aus der jeweiligen Sortierlinie auf die stromabwärts angeordnete Transportbahn auszulassen bzw. an diese abzugeben. Wird der Stopper 32 durch die Steuerung geöffnet, gelangt die durch den Stopper 32 aufgestaute Gruppe von Waren 11 auf die jeweilige stromabwärts angeordnete Transportbahn 22.

Demnach kann die Sortiervorrichtung 10 zum Sortieren mehrerer Waren 11 umfassen:
- in der ersten Transportbahn 21 eine dritte Einrichtung zum Separieren und Identifizieren 43,
- zumindest eine zweite Sortierstufe 200 mit zumindest zwei zweiten Sortierlinien 201a, 201b, welche jeweils stromaufwärts einen zweiten Eingang 203a, 203b und stromabwärts einen zweiten Ausgang 205a, 205b aufweisen,
- an den zweiten Ausgängen 205a, 205b der zweiten Sortierlinien 201a, 201b der zweiten Sortierstufe 200 je einen zweiten Stopper 32,
- in den zweiten Sortierlinien 201a, 201b der zweiten Sortierstufe 200 und stromaufwärts zum jeweiligen zweiten Stopper 32 je eine vierte Einrichtung zum Separieren und Identifizieren 44, und/oder
- zumindest eine zweite Transportbahn 22 zum Weiterführen der Waren 11.

Die ersten Ausgänge 105a, 105b der ersten Sortierlinien 101a, 101b der ersten Sortierstufe 100 sind über die erste Transportbahn 21 mit den zweiten Eingängen 203a, 203b der zweiten Sortierlinien 201a, 201b der zweiten Sortierstufe 200 verbunden, so dass Waren 11 aus einer der ersten Sortierlinien 101a, 101b der ersten Sortierstufe 100 in eine der zweiten Sortierlinien 201a, 201b der zweiten Sortierstufe 200 überführbar sind. Die zweiten Ausgänge 205a, 205b der zweiten Sortierlinien 201a, 201b der zweiten Sortierstufe 200 sind mit der zweiten Transportbahn 22 zum Weiterführen der Waren 11 verbunden.

Demnach kann die Sortiervorrichtung 10 zum Sortieren mehrerer Waren 11 umfassen:
- eine Steuerung einerseits zum Betätigen eines Schaltelementes für den jeweiligen ersten Stopper 31, um eine Gruppe von Waren 11 aus der jeweiligen ersten Sortierlinie 101a, 101b auf die erste Transportbahn 21 abzugeben, und andererseits zum Betätigen eines Schaltelementes für den jeweiligen zweiten Stopper 32, um eine Gruppe von Waren 11 aus der jeweiligen zweiten Sortierlinie 201a, 201b auf die zweite Transportbahn 22 abzugeben.

Die Einrichtungen zum Separieren und Identifizieren 41...44 sind mit der Steuerung verbunden.

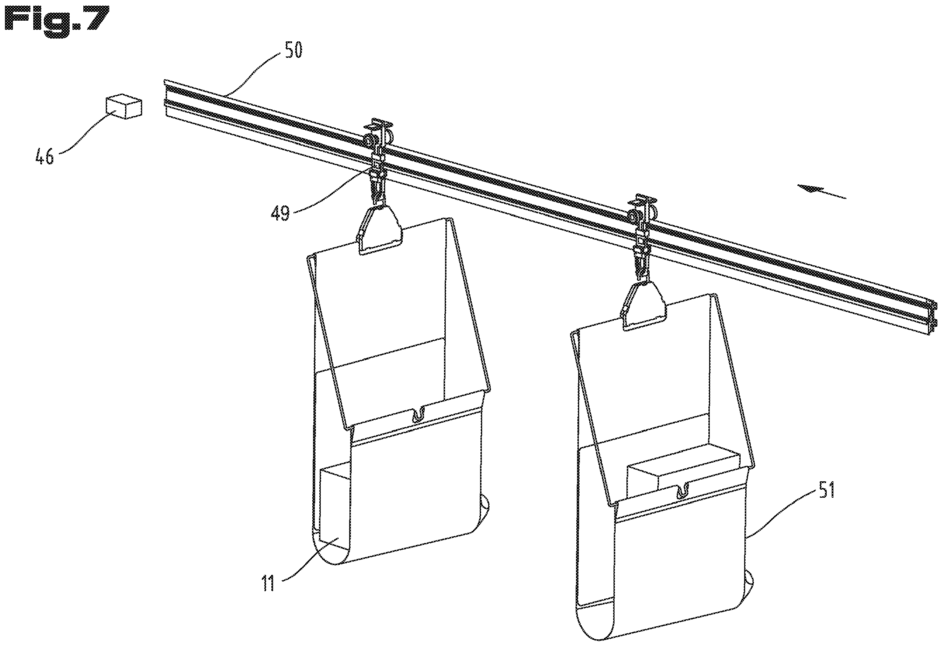

Alle Einrichtungen zum Separieren und Identifizieren 41...44 können Waren 11 vereinzeln, zählen und/oder Informationen von einem den jeweiligen Waren 11 zugeordneten Identifikationsmittel 49 (wie z. B: in Fig. 7 gezeigt) auslesen.

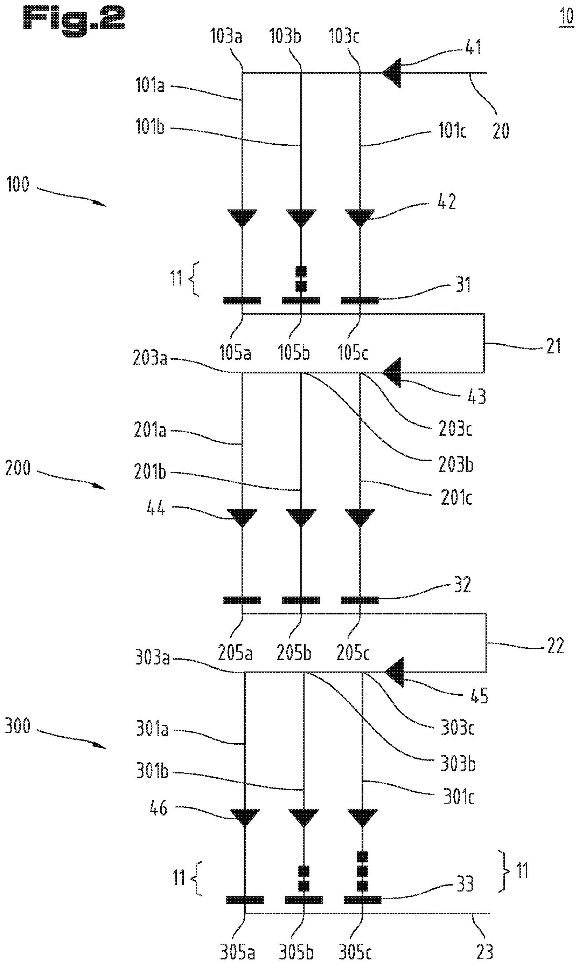

In der Fig. 2 ist eine weitere und gegebenenfalls für sich eigenständige Ausführungsform der Sortiervorrichtung 10 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Die in Fig. 2 dargestellte Sortiervorrichtung 10 unterscheidet sich von der in Fig. 1 gezeigten Sortiervorrichtung 10 durch eine dritte Sortierstufe 300 mit drei dritten Sortierlinien 301a bis 301c und jeweils eine weitere erste Sortierlinie 101c und zweite Sortierlinie 201c. Der Aufbau innerhalb der jeweiligen Sortierstufen 100, 200, 300 entspricht dem aus der Fig. 1 bekannten Aufbau. Wie aus der Zusammenschau der Figuren 1 und 2 ersichtlich, ist die dritte Sortierstufe 300 stromabwärts der zweiten Ausgänge 205a bis 205c der zweiten Sortierstufe 200 angeordnet. Die zweite Transportbahn 22 weist zwischen den zweiten Ausgängen 205a bis 205c und den dritten Eingängen 303a bis 303c eine fünfte Einrichtung zum Separieren und Identifizieren 45 auf. Eine dritte Transportbahn 23 ist stromabwärts der dritten Ausgänge 305a bis 305c angeordnet. Ferner ist eine sechste Einrichtung zum Separieren und Identifizieren 46 in jeder der dritten Sortierlinien 301a, 301b und 301c stromaufwärts von dem jeweiligen dritten Ausgang 305a bzw. 305b angeordnet. Jeweils ein Stopper 33 ist zwischen dem jeweiligen dritten Ausgang 305a, 305b, 305c und der jeweiligen sechsten Einrichtung 46 zum Separieren und Identifizieren angeordnet. Alle Stopper 33 sind, analog zu den Stoppern 31 und 32 der ersten und zweiten Sortierstufe 100 und 200, dazu vorgesehen, eine Gruppe von Waren 11 aus der jeweiligen Sortierlinie auf die stromabwärts angeordnete Transportbahn auszulassen bzw. an diese abzugeben. Wird der Stopper 33 durch die Steuerung geöffnet, gelangt die durch den Stopper 33 aufgestaute Gruppe von Waren 11 auf die jeweilige stromabwärts angeordnete Transportbahn 23. Gruppen von Waren 11 sind beispielhaft im Bereich des Stoppers 31 in der Sortierlinie 101b bzw. im Bereich der Stopper 33 in den Sortierlinien 301b und 301c dargestellt.

Demnach kann die Sortiervorrichtung 10 zum Sortieren mehrerer Waren 11 umfassen:
- in der zweiten Transportbahn 22 eine fünfte Einrichtung zum Separieren und Identifizieren 45,
- zumindest eine dritte Sortierstufe 300 mit zumindest zwei dritten Sortierlinien 301a, 301b, welche jeweils stromaufwärts einen dritten Eingang 303a, 303b und stromabwärts einen dritten Ausgang 305a, 305b aufweisen,
- an den dritten Ausgängen 305a, 305b der dritten Sortierlinien 301a, 301b der dritten Sortierstufe 300 je einen dritten Stopper 33,
- in den dritten Sortierlinien 301a, 301b der dritten Sortierstufe 300 und stromaufwärts zum jeweiligen dritten Stopper 33 je eine sechste Einrichtung zum Separieren und Identifizieren 46, und/oder
- zumindest eine dritte Transportbahn 23 zum Weiterführen der Waren 11.

Die fünften und sechsten Einrichtungen zum Separieren und Identifizieren 45, 46 sind mit der Steuerung verbunden.

Demnach kann die Sortiervorrichtung 10 zum Sortieren mehrerer Waren 11 umfassen:
- eine Steuerung einerseits zum Betätigen eines Schaltelementes für den jeweiligen dritten Stopper 33, um eine Gruppe von Waren 11 aus der jeweiligen dritten Sortierlinie 301a, 301b auf die dritte Transportbahn 23 abzugeben.

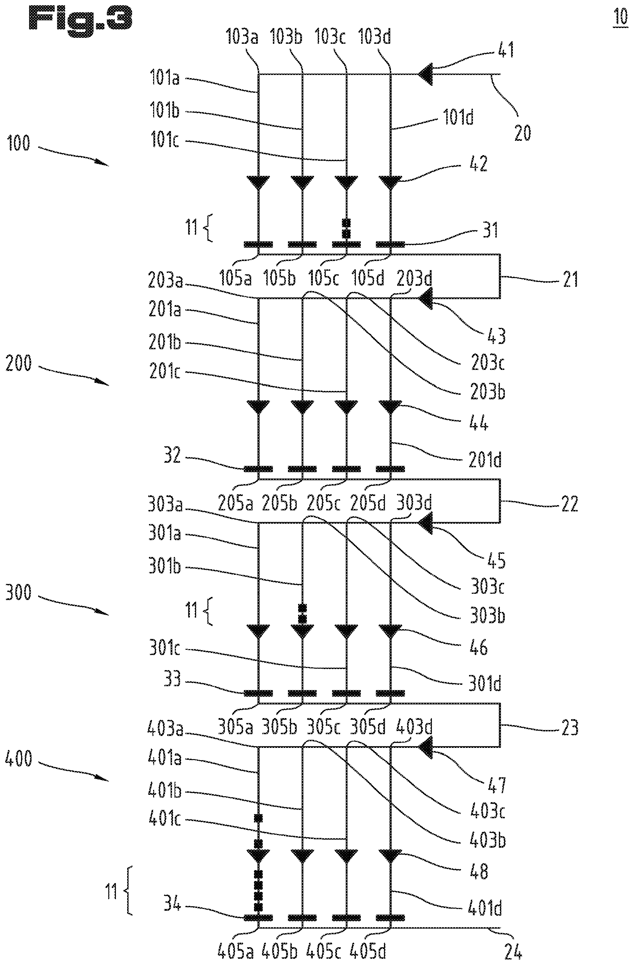

In der Fig. 3 ist eine weitere und gegebenenfalls für sich eigenständige Ausführungsform der Sortiervorrichtung 10 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Die in Fig. 3 dargestellte Sortiervorrichtung 10 unterscheidet sich von den in Figuren 1 und 2 gezeigten Sortiervorrichtungen 10 durch eine vierte Sortierstufe 400 mit vier vierten Sortierlinien 401a bis 401d und jeweils eine weitere erste Sortierlinie 101d, zweite Sortierlinie 201d, dritte Sortierlinie 301d. Der Aufbau innerhalb der jeweiligen Sortierstufen 100, 200, 300, 400 entspricht dem aus den Figuren 1 und 2 bekannten Aufbau. Wie aus der Zusammenschau der Figuren 1, 2 und 3 ersichtlich, ist die vierte Sortierstufe 400 stromabwärts der dritten Ausgänge 305a bis 305d der dritten Sortierstufe 300 angeordnet. Die dritte Transportbahn 23 weist zwischen den dritten Ausgängen 305a bis 305d und vierten Eingängen 403a bis 403d eine siebte Einrichtung zum Separieren und Identifizieren 47 auf. Eine vierte Transportbahn 24 ist stromabwärts der vierten Ausgänge 405a bis 405d angeordnet. Ferner ist eine achte Einrichtung zum Separieren und Identifizieren 48 in jeder der vierten Sortierlinien 401a bis 401d stromaufwärts von dem jeweiligen vierten Ausgang 405a bis 405d angeordnet. Jeweils ein Stopper 34 ist zwischen dem jeweiligen vierten Ausgang 405a bis 405d und der jeweiligen achten Einrichtung zum Separieren und Identifizieren 48 angeordnet. Alle Stopper 34 sind, analog zu den Stoppern 31, 32 und 33 der ersten, zweiten und dritten Sortierstufe 100, 200 und 300, dazu vorgesehen, eine Gruppe von Waren 11 aus der jeweiligen Sortierlinie auf die stromabwärts angeordnete Transportbahn auszulassen bzw. an diese abzugeben. Wird der Stopper 34 durch die Steuerung geöffnet, gelangt die durch den Stopper 34 aufgestaute Gruppe von Waren 11 auf die jeweilige stromabwärts angeordnete Transportbahn 24. Eine Gruppe von Waren 11 ist beispielhaft im Bereich des Stoppers 31 in der Sortierlinie 101c dargestellt. An der Sortierlinie 301b und an der Sortierlinie 401a werden Waren 11 in Richtung zu den Einrichtungen zum Separieren und Identifizieren 46, 48 dargestellt.

Demnach kann die Sortiervorrichtung 10 zum Sortieren mehrerer Waren 11 umfassen:
- in der dritten Transportbahn 23 eine siebte Einrichtung zum Separieren und Identifizieren 47,
- zumindest eine vierte Sortierstufe 400 mit zumindest zwei vierten Sortierlinien 401a, 401b, welche jeweils stromaufwärts einen vierten Eingang 403a, 403b und stromabwärts einen vierten Ausgang 405a, 405b aufweisen,
- an den vierten Ausgängen 405a, 405b der vierten Sortierlinien 401a, 401b der vierten Sortierstufe 400 je einen vierten Stopper 34,
- in den vierten Sortierlinien 401a, 401b der vierten Sortierstufe 400 und stromaufwärts zum jeweiligen vierten Stopper 34 je eine achte Einrichtung zum Separieren und Identifizieren 48, und/oder
- zumindest eine vierte Transportbahn 24 zum Weiterführen der Waren 11.

Die siebten und achten Einrichtungen zum Separieren und Identifizieren 47, 48 sind mit der Steuerung verbunden.

Demnach kann die Sortiervorrichtung 10 zum Sortieren mehrerer Waren 11 umfassen:
- eine Steuerung einerseits zum Betätigen eines Schaltelementes für den jeweiligen vierten Stopper 34, um eine Gruppe von Waren 11 aus der jeweiligen vierten Sortierlinie 401a, 401b auf die vierte Transportbahn 24 abzugeben.

In den oben beschriebenen Ausführungen sind alle Eingänge und Ausgänge der Sortierlinien mit der jeweiligen Transportbahn bzw. Zuführbahn über Weichen verbunden. Die Weichen, Stopper und Einrichtung zum Separieren und Identifizieren sind mit einer Steuerung (nicht gezeigt) verbunden und werden durch die Steuerung angesteuert. Die Transportbewegung der Waren in der Sortiervorrichtung kann schwerkraftbedingt oder angetrieben (oder eine Kombination davon) erfolgen. Durch eine jeweilige Ansteuerung der Weichen im Bereich der jeweiligen Eingänge der Sortierlinien können die Waren von der Zuführbahn bzw. Transportbahn auf die Sortierlinien geleitet werden. Die Anzahl der Sortierlinien pro Sortierstufe ist beliebig und es können die Sortierstufen eine von den anderen Sortierstufe(n) unterschiedliche Anzahl an Sortierlinien aufweisen.

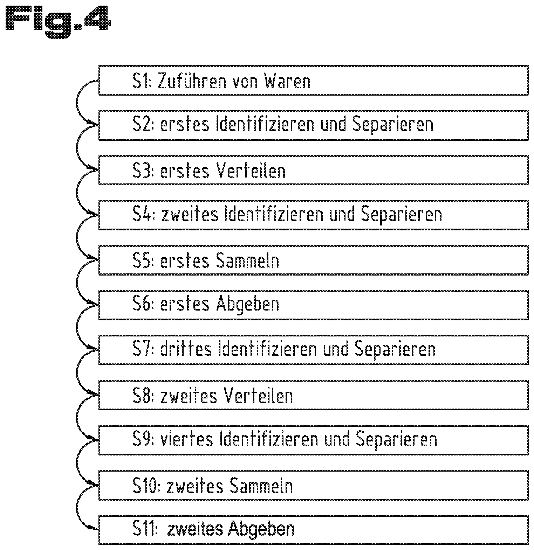

Figur 4 zeigt eine Ausführungsform eines erfindungsgemäßen Sortierverfahrens. Dabei werden in Schritt S1 Waren 11 über eine Zuführbahn 20 einer Sortiervorrichtung 10 (die eine der obigen Sortiervorrichtungen sein kann) zugeführt. In Schritt S2 werden die in Schritt S1 zugeführten Waren 11 ein erstes Mal identifiziert und separiert. Dies bedeutet, dass ein Abstand zwischen zwei einzelne identifizierte Waren 11 vorgesehen wird, der es erlaubt, dass die Waren 11 über stromabwärts gelegene Weichen auf einen gewünschten weiteren Verlauf gebracht werden. Im vorliegenden Fall wird dies z. B. über Weichen erreicht, welche die jeweilige Ware auf eine Sortierlinie führen.

Durch das in Schritt S2 erfolgte erste Identifizieren und Separieren, ist es im Schritt S3 möglich die jeweilige Ware 11, wie oben beschrieben, auf eine erste Sortierlinie 101a bis 101d zu verteilen. In einem vierten Schritt S4 werden die auf die jeweiligen ersten Sortierlinien in Schritt S3 verteilen Waren 11 ein zweites Mal identifiziert und separiert. Die im Schritt S4 identifizierten und separierten Waren 11 in einer der ersten Sortierlinien 101a bis 101d werden dann stromabwärts von einem Stopper in der jeweiligen ersten Sortierlinie 101a bis 101d im Schritt S5 gesammelt, bis eine Gruppe von Waren 11 vollständig ist. Die Gruppe von Waren 11 kann eine von der Steuerung vorgegebene Anzahl an und/oder Art von Waren 11 umfassen.

Im Schritt S6 wird die in Schritt S5 gesammelte Gruppe von Waren dann von einem der ersten Stopper 31 an einen stromabwärts gelegenen Abschnitt abgegeben. Im Schritt S7 werden die im Schritt S6 abgegebenen Waren ein drittes Mal identifiziert und separiert. Auf Grund des im Schritt S7 erfolgten Identifizierens und Separierens, kann jede der Waren 11 im Schritt S8 ein zweites Mal auf zweite Sortierlinien 201a bis 201d verteilt werden. In einem Schritt S9 werden die auf die jeweiligen zweiten Sortierlinien in Schritt S8 verteilten Waren 11 ein viertes Mal identifiziert und separiert. Die in Schritt S9 identifizierten und separierten Waren 11 in einer der zweiten Sortierlinien 201a bis 201d werden dann stromabwärts von einem Stopper in der jeweiligen zweiten Sortierlinie 201a bis 201d im Schritt S10 gesammelt, bis eine Gruppe von Waren 11 vollständig ist. Die Gruppe von Waren 11 kann eine von der Steuerung vorgegebene Anzahl an und/oder Art von Waren 11 umfassen. Im Schritt S11 wird die in Schritt S10 gesammelte Gruppe von Waren 11 dann von einem der zweiten Stopper 32 an einen stromabwärts gelegenen Abschnitt abgegeben.

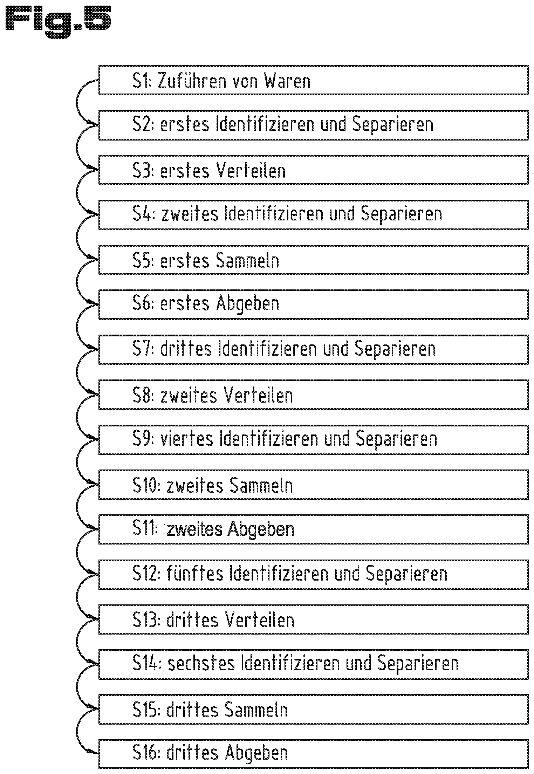

Das in Fig. 5 dargestellte Verfahren entspricht dem Verfahren aus Figur 4, mit lediglich dem Unterschied, dass ein weiteres und damit drittes Sammeln der Waren auf einer der dritten Sortierlinien 301a bis 301d nach dem in Zusammenhang mit Figur 4 beschriebenen Verfahren umfasst ist. Die Abläufe der Schritte S12 bis S16 entsprechen den oben beschriebenen Abläufen der Schritte S7 bis S11.

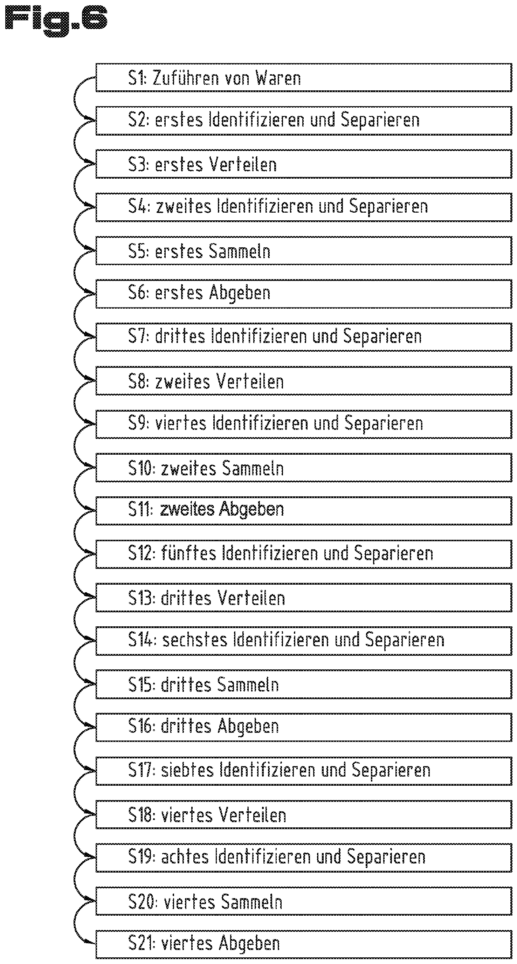

Das in Fig. 6 dargestellte Verfahren entspricht dem Verfahren aus Figur 5, mit lediglich dem Unterschied, dass ein weiteres und damit viertes Sammeln der Waren auf einer der vierten Sortierlinien 401a bis 401d nach dem in Zusammenhang mit Figur 5 beschriebenen Verfahren umfasst ist. Die Abläufe der Schritte S17 bis S21 entsprechen den oben beschriebenen Abläufen der Schritte S7 bis S11.

Die oben genannten Gruppen von Waren 11 werden durch eine Steuerung festgelegt und die Gruppenbildung ist beliebig festlegbar. Die Steuerung steuert ebenfalls die Stopper 31 bis 34 und Einrichtungen zum Identifizieren und Separieren 41 bis 48, sowie die Weichen in Abhängigkeit eines freiwählbaren Programms. Wenn eine bestimmte Gruppe von Waren 11 einen der Stopper 31 bis 34 erreicht, hält die jeweils stromaufwärts gelegene Einrichtung zum Identifizieren und Separieren 41 bis 48 die stromaufwärts befindlichen Waren 11 solange zurück, bis die betreffende Gruppe an Waren 11 durch den jeweiligen Stopper 31 bis 34 freigegeben und in einen Abschnitt stromabwärts des entsprechenden Stoppers 31 bis 34 geleitet wurde. Dann wird durch das Zusammenspiel in jeder Sortierlinie 101a bis 101d, 201a bis 201d, 301a bis 301d, 401a bis 401d von Stopper 31 bis 34 und stromaufwärts gelegener Einrichtung zum Identifizieren und Separieren 42, 44, 46 und 48 vor dem jeweiligen Stopper 31 bis 34 die nächste Gruppe von Waren 11 gesammelt.

Es sei an dieser Stelle hingewiesen, dass alle Einrichtungen zum Separieren und Identifizieren 41 bis 48 die Waren 11 vereinzeln, zählen und/oder Informationen von einem den jeweiligen Waren 11 zugeordneten Identifikationsmittel 49 auslesen können. In Fig. 7 ist beispielhaft ein Identifikationsmittel 49 und eine der Einrichtungen zum Separieren und Identifizieren dargestellt, nämlich die Einrichtung zum Separieren und Identifizieren 46. Die Einrichtung zum Separieren und Identifizieren 46 umfasst zumindest ein Lesegerät, durch welches Daten aus dem Identifikationsmittel 49 ausgelesen werden können.

Figur 7 zeigt ein Beispiel einer Hängefördervorrichtung 50 umfassend Hängetaschen 51, welche jeweils einen durch flexible Seitenwände begrenzten Aufbewahrungsraum ausbilden, in welchen je eine Ware 11 eingelegt ist.

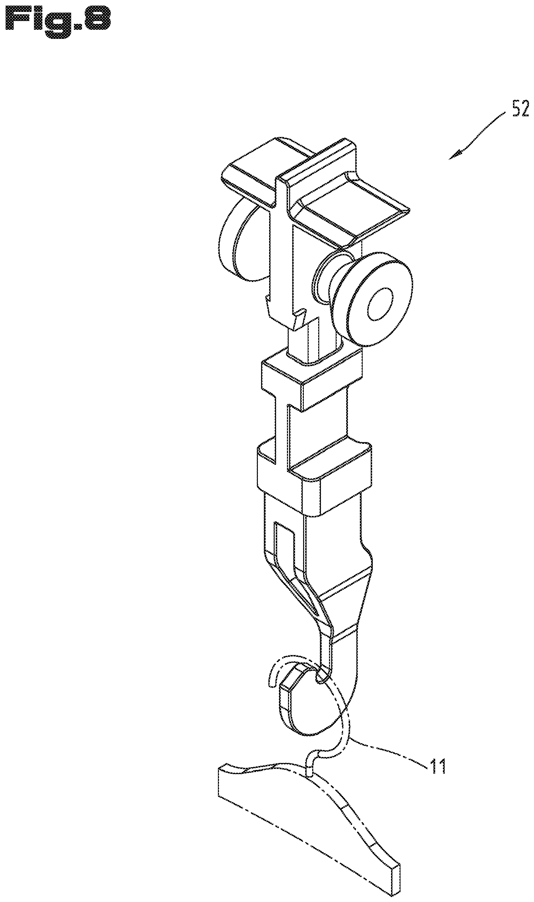

Figur 8 zeigt ein Beispiel eines Transportträgers 52 für eine Hängefördervorrichtung, an welchem eine schematisch durch strichpunktierte Linien angedeutete Ware 11 aufgehängt ist. Insbesondere ist die Ware 11 über einen Bügel auf dem Transportträger 52 aufgehängt.

Grundsätzlich kann die Hängefördervorrichtung 50 auch zumindest eine Hängetasche 51 zur Aufnahme einer oder mehrerer Waren 11 und zumindest einen Transportträger 52 zum Aufhängen einer oder mehrerer Waren 11 umfassen, wie dies jedoch nicht dargestellt ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch die gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 10: Sortiervorrichtung
- 11: Ware(n)
- 20: Zuführbahn
- 21: erste Transportbahn
- 22: zweite Transportbahn
- 23: dritte Transportbahn
- 24: vierte Transportbahn
- 31: erster Stopper
- 32: zweiter Stopper
- 33: dritter Stopper
- 34: vierter Stopper
- 41: erste Einrichtung zum Separieren und Identifizieren
- 42: zweite Einrichtung zum Separieren und Identifizieren
- 43: dritte Einrichtung zum Separieren und Identifizieren
- 44: vierte Einrichtung zum Separieren und Identifizieren
- 45: fünfte Einrichtung zum Separieren und Identifizieren
- 46: sechste Einrichtung zum Separieren und Identifizieren
- 47: siebte Einrichtung zum Separieren und Identifizieren
- 48: achte Einrichtung zum Separieren und Identifizieren
- 49: Identifikationsmittel
- 50: Hängefördervorrichtung
- 51: Hängetasche
- 52: Transportträger
- 100: erste Sortierstufe
- 101a, 101b, 101c, 100d: erste Sortierlinien
- 103a, 103b, 103c, 103d: erste Eingänge
- 105a, 105b, 105c, 107d: erste Ausgänge
- 200: zweite Sortierstufe
- 201a, 201b, 201c, 201d: zweite Sortierlinien
- 203a, 203b, 203c, 203d: zweite Eingänge
- 205a, 205b, 205c, 205d: zweite Ausgänge
- 300: dritte Sortierstufe
- 301a, 301b, 301c, 301d: dritte Sortierlinien
- 303a, 303b, 303c, 303d: dritte Eingänge
- 305a, 305b, 305c, 305d: dritte Ausgänge
- 400: vierte Sortierstufe
- 401a, 401b, 401c, 401d: vierte Sortierlinien
- 403a, 403b, 403c, 403d: vierte Eingänge
- 405a, 405b, 405c, 405d: vierte Ausgänge

## Patentansprüche

1. Sortiervorrichtung (10) zum Sortieren mehrerer Waren (11), wobei die Vorrichtung umfasst:
• zumindest eine erste Sortierstufe (100) mit zumindest zwei ersten Sortierlinien (101a, 101b), welche jeweils stromaufwärts einen ersten Eingang (103a, 103b) und stromabwärts einen ersten Ausgang (105a, 105b) aufweisen, wobei
die ersten Eingänge (103a, 103b) der ersten Sortierlinien (101a, 101b) der ersten Sortierstufe (100) mit einer Zuführbahn (20) zum Zuführen der Waren (11) verbunden sind und die ersten Ausgänge (105a, 105b) der ersten Sortierlinien (101a, 101a) der ersten Sortierstufe (100) mit einer ersten Transportbahn (21) zum Weiterführen der Waren (11) verbunden sind, und
an den ersten Ausgängen (105a, 105b) der ersten Sortierlinien (101a, 101b) der ersten Sortierstufe (100) je ein erster Stopper (31) angeordnet ist, der ein Schaltelement umfasst, welches durch eine Steuerung betätigbar ist, um eine Gruppe von Waren (11) aus der jeweiligen ersten Sortierlinie (101a, 101b) auf die erste Transportbahn (21) abzugeben, und
in der Zuführbahn (20) stromaufwärts der ersten Sortierlinien (101a, 101b) eine erste Einrichtung zum Separieren und Identifizieren (41) angeordnet ist, und
in den ersten Sortierlinien (101a, 101b) der ersten Sortierstufe (100) und stromaufwärts zum jeweiligen ersten Stopper (31) je eine zweite Einrichtung zum Separieren und Identifizieren (42) angeordnet ist, und
• zumindest eine zweite Sortierstufe (200) mit zumindest zwei zweiten Sortierlinien (201a, 201b), welche jeweils stromaufwärts einen zweiten Eingang (203a, 203b) und stromabwärts einen zweiten Ausgang (205a, 205b) aufweisen, wobei
die ersten Ausgänge (105a, 105b) der ersten Sortierlinien (101a, 101b) der ersten Sortierstufe (100) über die erste Transportbahn (21) mit den zweiten Eingängen (203a, 203b) der zweiten Sortierlinien (201a, 201b) der zweiten Sortierstufe (200) verbunden sind, so dass Waren (11) aus einer der ersten Sortierlinien (101a, 101b) der ersten Sortierstufe (100) in eine der zweiten Sortierlinien (201a, 201b) der zweiten Sortierstufe (200) überführbar sind, und die zweiten Ausgänge (205a, 205b) der zweiten Sortierlinien (201a, 201b) der zweiten Sortierstufe (200) mit einer zweiten Transportbahn (22) zum Weiterführen der Waren (11) verbunden sind, und
an den zweiten Ausgängen (205a, 205b) der zweiten Sortierlinien (201a, 201b) der zweiten Sortierstufe (200) je ein zweiter Stopper (32) angeordnet ist, der ein Schaltelement umfasst, welches durch eine Steuerung betätigbar ist, um eine Gruppe von Waren (11) aus der jeweiligen zweiten Sortierlinie (201a, 201b) auf die zweite Transportbahn (22) abzugeben, und
in der ersten Transportbahn (21) eine dritte Einrichtung zum Separieren und Identifizieren (43) angeordnet ist, und
in den zweiten Sortierlinien (201a, 201b) der zweiten Sortierstufe (200) und stromaufwärts zum jeweiligen zweiten Stopper (32) je eine vierte Einrichtung zum Separieren und Identifizieren (44) angeordnet ist, wobei die Einrichtungen zum Separieren und Identifizieren (41...44) mit der Steuerung verbunden sind.

2. Sortiervorrichtung (10) nach Anspruch 1, weiterhin umfassend eine dritte Sortierstufe (300), welche stromabwärts der zweiten Sortierstufe (200) angeordnet ist und welche zumindest zwei dritte Sortierlinien (301a, 301b) umfasst, die jeweils einen dritten Eingang (303a, 303b) und einen dritten Ausgang (305a, 305b) aufweisen, wobei
die dritten Eingänge (303a, 303b) der dritten Sortierlinien (301a, 301b) der dritten Sortierstufe (300) mit der zweiten Transportbahn (22) verbunden sind und die dritten Ausgänge (305a, 305b) der dritten Sortierlinien (301a, 301b) der dritten Sortierstufe (300) mit einer dritten Transportbahn (23) zum Weiterführen der Waren (11) verbunden sind, und
an den dritten Ausgängen (305a, 305b) der dritten Sortierlinien (301a, 301b) je ein dritter Stopper (33) angeordnet ist, der ein Schaltelement umfasst, welches durch eine Steuerung betätigbar ist, um eine Gruppe von Waren (11) aus der jeweiligen dritten Sortierlinie (301a, 301b) auf die dritte Transportbahn (23) abzugeben, und
in der zweiten Transportbahn (22) eine fünfte Einrichtung zum Separieren und Identifizieren (45) angeordnet ist, und
in den dritten Sortierlinien (301a, 301b) der dritten Sortierstufe (300) und stromaufwärts zum jeweiligen dritten Stopper (33) je eine sechste Einrichtung zum Separieren und Identifizieren (46) angeordnet ist, wobei die fünften und sechsten Einrichtungen zum Separieren und Identifizieren (45, 46) mit der Steuerung verbunden sind.

3. Sortiervorrichtung (10) nach Anspruch 2, weiterhin umfassend eine vierte Sortierstufe (400), welche stromabwärts der dritten Sortierstufe (300) angeordnet ist und welche zumindest zwei vierte Sortierlinien (401a, 401b) umfasst, die jeweils einen vierten Eingang (403a, 403b) und einen vierten Ausgang (405a, 405b) aufweisen,
die vierten Eingänge (403a, 403b) der vierten Sortierlinien (401a, 401b) der vierten Sortierstufe (400) mit der dritten Transportbahn (23) verbunden sind und die vierten Ausgänge (405a, 405b) der vierten Sortierlinien (401a, 401b) der vierten Sortierstufe (400) mit einer vierten Transportbahn (24) zum Weiterführen der Waren (11) verbunden sind, und
an den vierten Ausgängen (405a, 405b) der vierten Sortierlinien (401a, 401b) je ein vierter Stopper (34) angeordnet ist, der ein Schaltelement umfasst, welches durch eine Steuerung betätigbar ist, um eine Gruppe von Waren (11) aus der jeweiligen vierten Sortierlinie (401a, 401b) auf die vierte Transportbahn (24) abzugeben, und
in der dritten Transportbahn (23) eine siebte Einrichtung zum Separieren und Identifizieren (47) angeordnet ist, und
in den vierten Sortierlinien (401a, 401b) der vierten Sortierstufe (400) und stromaufwärts zum jeweiligen vierten Stopper (34) je eine achte Einrichtung zum Separieren und Identifizieren (48) angeordnet ist, wobei die siebten und achten Einrichtungen zum Separieren und Identifizieren (47, 48) mit der Steuerung verbunden sind.

4. Sortiervorrichtung (10) nach einem der vorangegangen Ansprüche, bei welcher zumindest eine der jeweiligen Sortierstufen (100, 200, 300, 400) mehr als zwei Sortierlinien aufweist.

5. Sortiervorrichtung (10) nach einem der vorangegangen Ansprüche, bei welcher die Steuerung vermittels zumindest einer der Einrichtungen zum Separieren und Identifizieren (41...48) zum Zählen der Ware (11) ausgelegt und vorgesehen ist.

6. Sortiervorrichtung (10) nach einem der vorangegangen Ansprüche, bei welcher die Einrichtungen zum Separieren und Identifizieren (41...48) zumindest ein Lesegerät umfassen und den Waren (11) ein Identifikationsmittel (49) zugeordnet ist, welches durch das Lesegerät ausgelesen werden kann.

7. Sortiervorrichtung (10) nach einem der vorangegangen Ansprüche, bei welcher die Zuführbahn (20), die Sortierlinien (101a, 101b, 201a, 201b, 301a, 301b, 401a, 401b) und die Transportbahn(en) (21..24) eine Hängefördervorrichtung (50) zum hängenden Transport der Waren (11) umfassen.

8. Sortiervorrichtung (10) nach Anspruch 7, bei welcher die Hängefördervorrichtung (50) zumindest eine Hängetasche (51) zur Aufnahme einer oder mehrerer Waren (11) umfasst.

9. Sortiervorrichtung (10) nach Anspruch 7, bei welcher die Hängefördervorrichtung (50) Transportträger (52) zum Aufhängen von zumindest einer Ware (11) umfasst.

10. Sortierverfahren für Waren (11), umfassend die Schritte:
• (S1) Zuführen von Waren (11) auf einer Zuführbahn (20),
• (S2) ein erstes Identifizieren und Separieren der Waren (11) in der Zuführbahn (20),
• (S3) ein erstes Verteilen der Waren (11) basierend auf dem ersten Identifizieren und Separieren (S2) auf zumindest zwei erste Sortierlinien (101a, 101b),
• (S4) ein zweites Identifizieren und Separieren der Waren (11) in der jeweiligen ersten Sortierlinie (101a, 101b)
• (S5) ein erstes Sammeln von Waren (11) zu einer Gruppe von Waren (11) in der jeweiligen ersten Sortierlinie (101a, 101b),
• (S6) ein erstes Abgeben der Gruppe von Waren (11) aus (S5) in eine erste Transportbahn (21),
• (S7) ein drittes Identifizieren und Separieren der Waren (11) in der ersten Transportbahn (21),
• (S8) ein zweites Verteilen der Waren (11) basierend auf dem dritten Identifizieren und Separieren (S7) auf zumindest zwei zweite Sortierlinien (201a, 201b),
• (S9) ein viertes Identifizieren und Separieren der Waren (11) in der jeweiligen zweiten Sortierlinie (201a, 201b),
• (S10) ein zweites Sammeln von Waren (11) zu einer Gruppe von Waren (11) in der jeweiligen zweiten Sortierlinie (201a, 201b),
• (S11) ein zweites Abgeben der Gruppe von Waren (11) aus (S10) in eine zweite Transportbahn (22).

11. Sortierverfahren nach Anspruch 10, weiterhin umfassend die anschließenden Schritte von:
• (S12) ein fünftes Identifizieren und Separieren der Waren (11) in der zweiten Transportbahn (22),
• (S13) ein drittes Verteilen der Waren (11) basierend auf dem fünften Identifizieren und Separieren (S12), auf zumindest zwei dritte Sortierlinien (301a, 301b),
• (S14) ein sechstes Identifizieren und Separieren der Waren (11) in der jeweiligen dritten Sortierlinie (301a; 301b),
• (S15) ein drittes Sammeln von Waren (11) zu einer Gruppe von Waren (11) in der jeweiligen dritten Sortierlinie (301a; 301b),
• (S16) ein drittes Abgeben der Gruppe von Waren (11) aus (S15) in eine dritte Transportbahn (23).

12. Sortierverfahren nach Anspruch 11, weiterhin umfassend die anschließenden Schritte von:
• (S17) ein siebtes Identifizieren und Separieren der Waren (11) in der dritten Transportbahn (23),
• (S18) ein viertes Verteilen der Waren (11) basierend auf dem siebten Identifizieren und Separieren (S17), auf zumindest zwei vierte Sortierlinien (401a, 401b),
• (S19) ein achtes Identifizieren und Separieren der Waren (11) in der jeweiligen vierten Sortierlinie (401a; 401b),
• (S20) ein viertes Sammeln von Waren (11) zu einer Gruppe von Waren (11) in der jeweiligen vierten Sortierlinie (401a; 401b),
• (S21) ein viertes Abgeben der Gruppe von Waren (11) aus (S20) in eine vierte Transportbahn (24).

## Claims

1. A sorting device (10) for sorting multiple articles (11), wherein the device comprises:
• at least one first sorting stage (100) with at least two first sorting lines (101a, 101b), each having a first entrance (103a, 103b) upstream and a first exit (105a, 105b) downstream, wherein
the first entrances (103a, 103b) of the first sorting lines (101a, 101b) of the first sorting stage (100) are connected to a supply path (20) for supplying the articles (11), and the first exits (105a, 105b) of the first sorting lines (101a, 100a) of the first sorting stage (100) are connected to a first transport path (21) for advancing the articles (11), and
a first stopper (31) is arranged at each of the first exits (105a, 105b) of the first sorting lines (101a, 101b) of the first sorting stage (100), which stopper (31) comprises a switching element, which can be actuated by a controller in order to discharge a group of articles (11) from the respective first sorting line (101a, 101b) onto the first transport path (21), and
a first apparatus for separating and identifying (41) is arranged in the supply path (20) upstream of the first sorting lines (101a, 101b), and
in each case, a second apparatus for separating and identifying (42) is arranged in the first sorting lines (101a, 101b) of the first sorting stage (100) and upstream of the corresponding first stopper (31), and
• at least one second sorting stage (200) with at least two second sorting lines (201a, 201b), each having a first entrance (203a, 203b) upstream and a second exit (205a, 205b) downstream, wherein
the first exits (105a, 105b) of the first sorting lines (101a, 101b) of the first sorting stage (100) are connected to the second entrances (203a, 203b) of the second sorting lines (201a, 201b) of the second sorting stage (200) by means of the first transport path (21), so that articles (11) can be transferred from one of the first sorting lines (101a, 101b) of the first sorting stage (100) into one of the second sorting lines (201a, 201b) of the second sorting stage (200), and the second exits (205a, 205b) of the second sorting lines (201a, 201b) of the second sorting stage (200) are connected to a second transport path (22) for advancing the articles (11), and
a second stopper (32) is arranged at each of the second exits (205a, 205b) of the second sorting lines (201a, 201b) of the second sorting stage (200), which stopper (32) comprises a switching element, which can be actuated by a controller in order to discharge a group of articles (11) from the respective second sorting line (201a, 201b) onto the second transport path (22), and
a third apparatus for separating and identifying (43) is arranged in the first transport path (21), and
in each case, a fourth apparatus for separating and identifying (44) is arranged in the second sorting lines (201a, 201b) of the second sorting stage (200) and upstream of the corresponding second stopper (32), wherein the apparatuses for separating and identifying (41...44) are connected to the controller.

2. The sorting device (10) according to claim 1, further comprising a third sorting stage (300), which is arranged downstream of the second sorting stage (200) and which comprises at least two third sorting lines (301a, 301b), each having a third entrance (303a, 303b) and a third exit (305a, 305b), wherein
the third entrances (303a, 303b) of the third sorting lines (301a, 301b) of the third sorting stage (300) are connected to the second transport path (22), and the third exits (305a, 305b) of the third sorting lines (301a, 301b) of the third sorting stage (300) are connected to a third transport path (23) for advancing the articles (11), and
a third stopper (33) is arranged at each of the third exits (305a, 305b) of the third sorting lines (301a, 301b), which stopper (33) comprises a switching element, which can be actuated by a controller in order to discharge a group of articles (11) from the respective third sorting line (301a, 301b) onto the third transport path (23), and
a fifth apparatus for separating and identifying (45) is arranged in the second transport path (22), and
in each case, a sixth apparatus for separating and identifying (46) is arranged in the third sorting lines (301a, 301b) of the third sorting stage (300) and upstream of the corresponding third stopper (33), wherein the fifth and sixth apparatuses for separating and identifying (45, 46) are connected to the controller.

3. The sorting device (10) according to claim 2, further comprising a fourth sorting stage (400), which is arranged downstream of the third sorting stage (300) and which comprises at least two fourth sorting lines (401a, 401b), each having a fourth entrance (403a, 403b) and a fourth exit (405a, 405b),
the fourth entrances (403a, 403b) of the fourth sorting lines (401a, 401b) of the fourth sorting stage (400) are connected to the third transport path (23), and the fourth exits (405a, 405b) of the fourth sorting lines (401a, 401b) of the fourth sorting stage (400) are connected to a fourth transport path (24) for advancing the articles (11), and
a fourth stopper (34) is arranged at each of the fourth exits (405a, 405b) of the fourth sorting lines (401a, 401b), which stopper (34) comprises a switching element, which can be actuated by a controller in order to discharge a group of articles (11) from the respective fourth sorting line (401a, 401b) onto the fourth transport path (24), and a seventh apparatus for separating and identifying (47) is arranged in the third transport path (23), and
in each case, an eighth apparatus for separating and identifying (48) is arranged in the fourth sorting lines (401a, 401b) of the fourth sorting stage (400) and upstream of the corresponding fourth stopper (34), wherein the seventh and eighth apparatuses for separating and identifying (47, 48) are connected to the controller.

4. The sorting device (10) according to one of the preceding claims, in which at least one of the respective sorting stages (100, 200, 300, 400) has more than two sorting lines.

5. The sorting device (10) according to one of the preceding claims, in which the controller is configured and provided for counting the articles (11) by means of at least one of the apparatuses for separating and identifying (41...48).

6. The sorting device (10) according to one of the preceding claims, in which the apparatuses for separating and identifying (41...48) comprise at least one reader, and the articles (11) are assigned an identifying means (49), which can be read by the reader.

7. The sorting device (10) according to one of the preceding claims, in which the supply path (20), the sorting lines (101a, 101b, 201a, 201b, 301a, 301b, 401a, 401b) and the transport path(s) (21...24) comprise an overhead conveying device (50) for the suspended transport of the articles (11).

8. The sorting device (10) according to claim 7, in which the overhead conveying device (50) comprises at least one hanging bag (51) for receiving one or multiple articles (11).

9. The sorting device (10) according to claim 7, in which the overhead conveying device (50) comprises transport carriers (52) for suspending at least one article (11).

10. A sorting method for articles (11), comprising the steps of:
• (S1) supplying articles (11) on a supply path (20),
• (S2) a first identification and separation of the articles (11) in the supply path (20),
• (S3) a first distribution of the articles (11) based on the first identification and separation (S2) on at least two first sorting lines (101a, 101b),
• (S4) a second identification and separation of the articles (11) in the respective first sorting line (101a; 101b),
• (S5) a first collecting of articles (11) to form a group of articles (11) in the respective first sorting line (101a; 101b),
• (S6) a first discharge of the group of articles (11) from (S5) into a first transport path (21),
• (S7) a third identification and separation of the articles (11) in the first transport path (21),
• (S8) a second distribution of the articles (11) based on the third identification and separation (S7) on at least two second sorting lines (201a, 201b),
• (S9) a fourth identification and separation of the articles (11) in the respective second sorting line (201a; 201b),
• (S10) a second collecting of articles (11) to form a group of articles (11) in the respective second sorting line (201a; 201b),
• (S11) a second discharge of the group of articles (11) from (S10) into a second transport path (22).

11. The sorting method according to claim 10, further comprising the subsequent steps of:
• (S12) a fifth identification and separation of the articles (11) in the second transport path (22),
• (S13) a third distribution of the articles (11) based on the fifth identification and separation (S12), on at least two third sorting lines (301a, 301b),
• (S14) a sixth identification and separation of the articles (11) in the respective third sorting line (301a; 301b),
• (S15) a third collecting of articles (11) to form a group of articles (11) in the respective third sorting line (301a; 301b),
• (S16) a third discharge of the group of articles (11) from (S15) into a first transport path (23).

12. The sorting method according to claim 11, further comprising the subsequent steps of:
• (S17) a seventh identification and separation of the articles (11) in the third transport path (23),
• (S18) a fourth distribution of the articles (11) based on the seventh identification and separation (S17), on at least two fourth sorting lines (401a, 401b),
• (S19) an eighth identification and separation of the articles (11) in the respective fourth sorting line (401a; 401b),
• (S20) a fourth collecting of articles (11) to form a group of articles (11) in the respective fourth sorting line (401a; 401b),
• (S21) a fourth discharge of the group of articles (11) from (S20) into a fourth transport path (24).

## Revendications

1. Dispositif de tri (10) pour le tri de plusieurs articles (11), dans lequel le dispositif comprend :
• au moins un premier étage de tri (100) avec au moins deux premières lignes de tri (101a, 101b), qui comprennent respectivement, en amont, une première entrée (103a, 103b) et, en aval, une première sortie (105a, 105b), dans lequel
les premières entrées (103a, 103b) des premières lignes de tri (101a, 101b) du premier étage de tri (100) sont reliées avec une piste d'introduction (20) pour le déplacement des articles (11) et les premières sorties (105a, 105b) des premières lignes de tri (101a, 101b) du premier étage de tri (100) sont reliées avec la première piste de transport (21) pour le transport des articles (11) et
au niveau de chacune des premières sorties (105a, 105b) des premières lignes de tri (101a, 101b) du premier étage de tri (100) est disposée une première butée (31) qui comprend un élément de commutation qui peut être actionné par une commande, afin de déposer un groupe d'articles (11) provenant de la première ligne de tri (101a, 101b) respective sur la première piste de transport (21) et
dans la bande d'introduction (20), en amont des premières lignes de tri (101a, 101b), est disposé un premier dispositif pour la séparation et l'identification (41) et
dans chacune des premières lignes de tri (101a, 101b) du premier étage de tri (100) et, en amont de la première butée (31) respective, est disposé un deuxième dispositif pour la séparation et l'identification (42) et
• au moins un deuxième étage de tri (200) avec au moins deux deuxièmes lignes de tri (201a, 201b) qui comprennent respectivement, en amont, une deuxième entrée (203a, 203b), et, en aval, une deuxième sortie (205a, 205b), dans lequel les premières sorties (105a, 105b) des premières lignes de tri (101a, 101b) du premier étage de tri (100) sont reliées, par l'intermédiaire de la première piste de transport (21), avec les deuxièmes entrées (203a, 203b) des deuxièmes lignes de tri (201a, 201b) du deuxième étage de tri (200), de sorte que des articles (11) provenant d'une des premières lignes de tri (101a, 101b) du premier étage de tri (100) peuvent être transférés vers une des deuxièmes lignes de tri (201a, 201b) du deuxième étage de tri (200) et les deuxièmes sorties (205a, 205b) des deuxièmes lignes de tri (201a, 201b) du deuxième étage de tri (200) sont reliées avec une deuxième piste de transport (22) pour le transport des articles (11) et
au niveau de chacune des deuxièmes sorties (205a, 205b) des deuxièmes lignes de tri (201a, 201b) du deuxième étage de tri (200), est disposée une deuxième butée (32), qui comprend un élément de commutation qui peut être actionné par une commande, afin de déposer un groupe d'articles (11) provenant de la deuxième ligne de tri (201a, 201b) vers la deuxième piste de transport (22) et
dans la première piste de transport (21), est disposé un troisième dispositif pour la séparation et l'identification (43) et
dans les deuxièmes lignes de tri (201a, 201b) du deuxième étage de tri (200) et, en mont de la deuxième butée (32) respective, est disposé un quatrième dispositif pour la séparation et l'identification (44), dans lequel les dispositifs pour la séparation et l'identification (41... 44) sont reliés avec la commande.

2. Dispositif de tri (10) selon la revendication 1, comprenant en outre un troisième étage de tri (300), qui est disposé en aval du deuxième étage de tri (200) et qui comprend au moins deux troisièmes lignes de tri (301a, 301b), qui comprennent respectivement une troisième entrée (303a, 303b) et une troisième sortie (305a, 305b), dans lequel
les troisièmes entrées (303a, 303b) des troisièmes lignes de tri (301a, 301b) du troisième étage de tri (300) sont reliées avec la deuxième piste de transport (22) et les troisièmes sorties (305a, 305b) des troisièmes lignes de tri (301a, 301b) du troisième étage de tri (300) sont reliées avec une troisième piste de transport (23) pour le transport des articles (11) et
au niveau de chacune des troisièmes sorties (305a, 305b) des troisièmes lignes de tri (301a, 301b) est disposée une troisième butée (33) qui comprend un élément de commutation qui peut être actionné par une commande, afin de déposer un groupe d'articles (11) provenant de la troisième ligne de tri (301a, 301b) respective vers la troisième piste de transport (23) et
dans la deuxième piste de transport (22) est disposé un cinquième dispositif pour la séparation et l'identification (45) et
dans les troisièmes lignes de tri (301a, 301b) du troisième étage de tri (300) et, en amont de la troisième butée (33) respective, est disposé un sixième dispositif pour la séparation et l'identification (46), dans lequel les cinquième et sixième dispositifs pour la séparation et l'identification (45, 46) sont reliés avec la commande.

3. Dispositif de tri (10) selon la revendication 2, comprenant en outre un quatrième étage de tri (400), qui est disposé en aval du troisième étage de tri (300) et qui comprend au moins deux quatrièmes lignes de tri (401a, 401b) qui comprennent respectivement une quatrième entrée (403a, 403b) et une quatrième sortie (405a, 405b),
les quatrièmes entrées (403a, 403b) des quatrièmes lignes de tri (401a, 401b) du quatrième étage de tri (400) sont reliées avec la troisième piste de transport (23) et les quatrièmes sorties (405a, 405b) des quatrièmes lignes de tri (401a, 401b) du quatrième étage de tri (400) sont reliées avec une quatrième piste de transport (24) pour le transport des articles (11) et
au niveau de chacune des quatrièmes sorties (405a, 405b) des quatrièmes lignes de tri (401a, 401b), est disposée une quatrième butée (34), qui comprend un élément de commutation qui peut être actionné par une commande, afin de déposer un groupe d'articles (11) provenant de la quatrième ligne de tri (401a, 401b) vers la quatrième piste de transport (24) et
dans la troisième piste de transport (23), est disposé un septième dispositif pour la séparation et l'identification (47) et
dans les quatrièmes lignes de tri (401a, 401b) du quatrième étage de tri (400) et, en amont de la quatrième butée (34) respective, est disposé un huitième dispositif pour la séparation et l'identification (48), dans lequel les septième et huitième dispositifs pour la séparation et l'identification (47, 48) sont reliés avec la commande.

4. Dispositif de tri (10) selon l'une des revendications précédentes, dans lequel au moins un des étages de tri (100, 200, 300, 400) respectifs comprend plus de deux lignes de tri.

5. Dispositif de tri (10) selon l'une des revendications précédentes, dans lequel la commande est conçue et prévue, au moyen d'au moins un des dispositifs pour la séparation et l'identification (41... 48), pour le comptage des articles (11).

6. Dispositif de tri (10) selon l'une des revendications précédentes, dans lequel les dispositifs pour la séparation et l'identification (41... 48) comprennent au moins un appareil de lecture et, aux articles (11), correspond un moyen d'identification (49) qui peut être lu par l'appareil de lecture.

7. Dispositif de tri (10) selon l'une des revendications précédentes, dans lequel la bande d'introduction (20), les lignes de tri (101a, 101b, 201a, 201b, 301a, 301b, 401a, 401b) et les bandes de transport (21... 24) comprennent un dispositif de convoyage suspendu (50) pour le transport suspendu des articles (11).

8. Dispositif de tri (10) selon la revendication 7, dans lequel le dispositif de convoyage suspendu (50) comprend au moins une poche suspendue (51) pour le logement d'un ou plusieurs articles (11).

9. Dispositif de tri (10) selon la revendication 7, dans lequel le dispositif de convoyage suspendu (50) comprend des supports de transport (52) pour la suspension d'au moins un article (11).

10. Procédé de tri pour des articles (11), comprenant les étapes suivantes :
• (S1) introduction d'articles (11) sur une bande d'introduction (20),
• (S2) une première identification et séparation des articles (11) sur la bande d'introduction (20),
• (S3) une première répartition des articles (11) sur la base de la première identification et séparation (S2) sur au moins deux premières lignes de tri (101a, 101b),
• (S4) une deuxième identification et séparation des articles (11) dans la première ligne de tri (101a ; 101b) respective
• (S5) un premier regroupement d'articles (11) en un groupe d'articles (11) dans la première ligne de tri (101a ; 101b) respective,
• (S6) une première dépose du groupe (11) de (S5) sur une première piste de transport (21),
• (S7) une troisième identification et séparation des articles (11) sur la première piste de transport (21),
• (S8) une deuxième répartition des articles (11) sur la base de la troisième identification et séparation (S7) sur au moins deux deuxièmes lignes de tri (201a, 201b),
• (S9) une quatrième identification et séparation des articles (11) dans la deuxième ligne de tri (201a ; 201b) respective,
• (S10) un deuxième regroupement d'articles (11) en un groupe d'articles (11) dans la deuxième ligne de tri (201a ; 201b) respective,
• (S11) une deuxième dépose du groupe d'articles (11) de (S10) sur une deuxième piste de transport (22).

11. Procédé de tri selon la revendication 10, comprenant en outre les étapes suivantes :
• (S12) une cinquième identification et séparation des articles (11) sur la deuxième piste de transport (22),
• (S13) une troisième répartition des articles (11) sur la base de la cinquième identification et séparation des articles (11) sur au moins deux troisièmes lignes de tri (301a, 301b),
• (S14) une sixième identification et séparation des articles (11) dans la troisième ligne de tri (301a ; 301b) respective,
• (S15) un troisième regroupement d'articles (11) en un groupe d'articles (11) dans la troisième ligne de tri (301a ; 301b) respective,
• (S16) une troisième dépose du groupe d'articles (11) de (S15) sur une troisième bande de transport (23).

12. Procédé de tri selon la revendication 11, comprenant en outre les étapes suivantes :
• (S17) une septième identification et séparation des articles (11) sur la troisième piste de transport (23),
• (S 18) une quatrième répartition des articles (11) sur la base de la septième identification et séparation des articles (S17) sur au moins deux quatrièmes lignes de tri (401a, 401b),
• (S19) une huitième identification et séparation des articles (11) dans la quatrième ligne de tri (401a ; 401b) respective,
• (S20) un quatrième regroupement d'articles (11) en un groupe d'articles (11) dans la quatrième ligne de tri (401a ; 401b) respective,
• (S21) une quatrième dépose du groupe d'articles (11) de (S20) sur une quatrième piste de transport (24).
